# EUROPEAN PATENT SPECIFICATION

(11) **EP 2 909 662 B1**
(45) Date of publication and mention of the grant of the patent: **02.11.2016**
(21) Application number: 13786330.4
(22) Date of filing: 30.09.2013
(51) Int. Cl.: G02B 6/02, G02B 6/255

(54) **TECHNOLOGY FOR PREPARATION OF OPTICAL FIBER WAVEGUIDES FROM POLYDIMETHYLSILOXANE**
TECHNOLOGIE ZUR HERSTELLUNG VON LICHTWELLENLEITERN AUS POLYDIMETHYLSILOXAN
TECHNIQUE DE PRÉPARATION DE GUIDES D'ONDE À FIBRES OPTIQUES À PARTIR DE POLYDIMÉTHYLSILOXANE

(30) Priority: 17.10.2012 SK 812012
(43) Date of publication of application: 26.08.2015
(73) Proprietor: Zilinská Univerzita V Ziline, 010 26 Zilina (SK); Centrum Vedecko-technických Informácií SR, 811 04 Bratislava 1 (SK)
(72) Inventor: MARTINCEK, Ivan, 010 01 Zilina (SK); PUDIS, Dusan, 010 08Zilina (SK)
(74) Representative: DREISS Patentanwälte PartG mbB
(86) International application number: PCT/SK2013/000012
(87) International publication number: WO 2014/062139

(56) References cited:
- JP-A- 2003 121 677
- JP-A- 2005 024 813
- JP-A- 2010 009 019
- DONG C-H ET AL: "Fabrication of high-Q polydimethylsiloxane optical microspheres for thermal sensing", APPLIED PHYSICS LETTERS, AMERICAN INSTITUTE OF PHYSICS, US, vol. 94, no. 23, 10 June 2009 (2009-06-10) , pages 231119-231119, XP012121570, ISSN: 0003-6951, DOI: 10.1063/1.3152791

## Description

### Field of the Invention

The invention is related to technology of preparation optical fiber waveguides from polydimethylsiloxane using the method of pulling partially cured polydimethylsiloxane. The technical field to which the invention is related is photonics and fiber optics.

### State of the Art

Polydimethylsiloxane (PDMS) is a silicone elastomer, which belongs to the group of organosiloxane polymers. PDMS is elastic, hydrophobic, optically transparent, electrically conductive and biocompatible material. These properties predetermine it for the use in the process of manufacturing of microelectromechanical systems, microfluidic components, optofluid waveguides and also in other types of micromanufacturing for electrical, optical, microfluidic, biological, biomedical and other appliciations.

The basic assumption of using PDMS for the preparation of optical waveguides is to create the desired optical waveguide with a suitable length and diameter. Currently the most widely used technique to create optical waveguides from PDMS is a soft lithography method. Using this method, the molds of optical waveguides are created from PDMS replicating the models created by other techniques, such as photolithography or electron lithography, to photoresistors or other suitable materials. The illustrative process of creating the cast of optical waveguide from PDMS using a method of photolithography in positive photoresist is following. Firstly a photosensitive material is applied to a suitable substrate, into which by irradiation with light of appropriate wavelength, templates for the desired optical waveguides are created. Subsequently, the irradiated light-sensitive material is dissolved in the developer to remove unwanted parts of the photosensitive material. This way, the template for other operations is created. Then the uncured PDMS, which very well reproduces the relief of the model is poured on the template and is left to harden. After hardening the PDMS is loosen from the model or the pattern is etched off in a suitable solvent. This way it is possible to create a surface optical waveguides in PDMS, which can be further edited for the purposes of their use in waveguide optics.

JP-A-2010009019 discloses a technique for preparing an optical waveguide from an uncured resin. This document does not disclose the use of resin between two fibre ends, nor does it disclose the use of partially cured polydimethylsiloxane.

Dong C-H et al, Fabrication of high-Q polydimethylsiloxane optical microspheres for thermal sensing, Applied Physics Letts., 94no. 92, page 231119, (10.06.2010) discloses a method of preparing optical microspheres from polydimethylsiloxane. This document does not disclose the partial curing of the polymer and the drawing of it into a fibre.

However, until now no technology has been published that allows preparing optical fiber waveguides directly by pulling the PDMS.

### Summary of the Invention

The principle of the technology of preparation an optical fiber waveguides from PDMS is based on pulling fibers from partially cured PDMS. For the preparation of optical waveguides from PDMS, the two-component silicone elastomer is used, in which the component A is formed by own prepolymer and component B is formed by curing agent.

These two components are mixed in appropriate ratio. After mixing the components A and B , the PDMS is gradually curing due to the formation of chemical cross-links between the chains of PDMS. This curing depends on the temperature, where by increasing the temperature of PDMS the curing time is reduced. Immediately after mixing of components A and B at room temperature, the PDMS has consistency of honey, which does not allow PDMS to create fiber. Gradually by curing the PDMS, its viscosity is increasing and after certain time the partially cured PDMS has such properties that it is possible to form fibers from it by pulling. From thus partially cured PDMS, then by methods of pulling, optical fiber waveguides with desired lengths and diameters are produced.

### Brief Description of Drawings

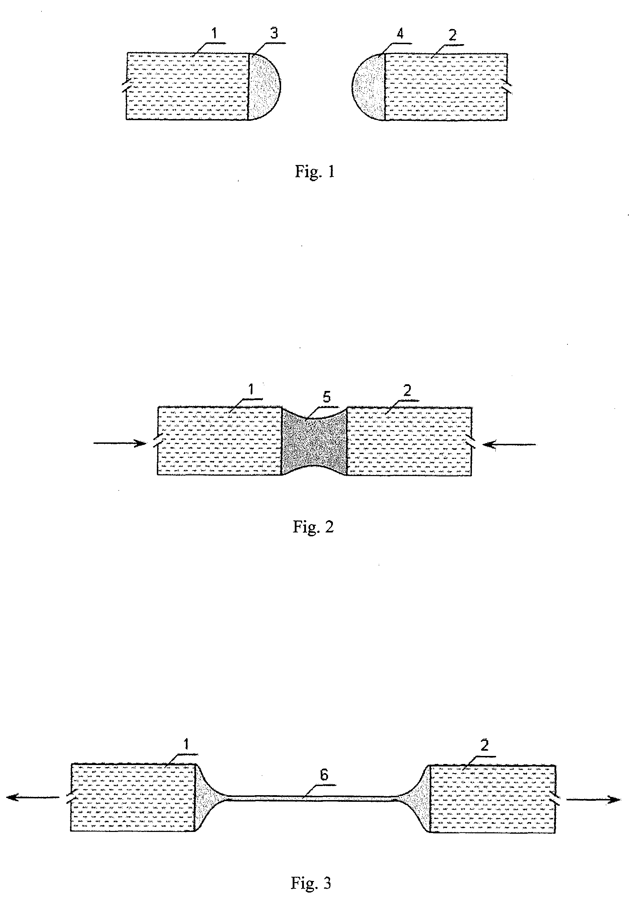

The invention is further clarified by drawings, in which Fig. 1 shows hemispherical PDMS droplets applied on the end of two optical fibers from fused silica, Fig. 2 the connection of two hemispherical PDMS droplets applied to the end of optical fibers from fused silica, Fig. 3 the way of retreating of optical fibers from fused silica related with partially cured PDMS and formation of an optical fiber from PDMS between two optical fibers from fused silica.

### Application Examples

The example of realization of invention will be clarified in description of the process of creation an optical fiber waveguide from PDMS by pulling partially cured PDMS between two fibers.

On the preparation of PDMS we used the silicone elastomer Silgard 184 from the company Dow Corning, which is composed of component A-prepolymer and component B-curing agent. In the glass container we mixed components A:B in a ratio of 10:1. After mixing we loaded the PDMS onto the ends of two optical fibers from fused silica 1 and 2 in such way, that the PDMS created hemispherical drops on the end of fibers 3 and 4. After mixing the components A and B, the gradual curing of PDMS begins. At room temperature, approximately after eight hours after mixing components A and B, the PDMS has such characteristics, that by pulling it is possible to create fiber structures from it. We created optical fibers from partially cured PDMS by procedure whereby the optical fibers from fused silica **1** and **2,** on the ends of which were applied hemispherical drops of PDMS **3** and **4** positioned to such distance that the hemispherical drops of PDMS **3** and **4** joined and created a bond **5** between the optical fibers from fused silica **1** and **2** PDMS. After creating a PDMS bond **5** between optical fibers from fused silica **1** and **2** and partial cure of PDMS bond **5,** we gradually, and coaxially moved apart the optical fibers from fused silica **1** and **2.** At the coaxial moving apart of optical fibers **1** and **2,** from the partially cured bond of PDMS **5** between optical fibers from fused silica **1** and **2,** the PDMS fiber **6** with good optical properties was produced.

### Industrial Applicability

The technology for preparation of optical fiber waveguides from polydimethylsiloxane may find practical use at creating optical elements for needs of photonic applications at different sectors of industry.

## Claims

1. Method for preparation of optical fiber waveguides from polydimethylsiloxane **characterized by** the fact that the optical fiber waveguides are created from polydimethylsiloxane after its partial cure in such way, that the ends of two fibers between which are at a suitable space are linked together by partially cured polydimethylsiloxane and subsequently these two ends of fiber are moved apart until a polydimethylsiloxane fiber with the required parameters between them is produced.

2. Method for preparation of optical fiber waveguides from polydimethylsiloxane **characterized by** the fact that the optical fiber waveguides are created from polydimethylsiloxane after its partial cure that way, that one end of the fiber with a suitable diameter is placed in a container with partially cured polydimethylsiloxane and subsequently this inserted end of a fiber in polydimethylsiloxane is pulled out from the container with polydimethylsiloxane that way that between the fiber and the polydimethylsiloxane in the container the polydimethylsiloxane optical fiber with required parameters will be formed.

## Patentansprüche

1. Verfahren zur Herstellung von Lichtwellenleitern aus Polydimethylsiloxan, **dadurch gekennzeichnet, dass** die Lichtwellenleiter erstellt werden aus Polydimethylsiloxan nach dessen partiellen Aushärtung in solcher Weise, dass die Enden von zwei Fasern, die zwischen sich einen geeigneten Abstand haben, durch partiell ausgehärtetes Polydimethylsiloxan zusammengefügt werden und diese zwei Faserenden anschließend so lange voneinander fortbewegt werden, bis eine Polydimethylsiloxanfaser mit den geforderten Parametern zwischen ihnen entsteht.

2. Verfahren zur Herstellung von Lichtwellenleitern aus Polydimethylsiloxan, **dadurch gekennzeichnet, dass** die Lichtwellenleiter erstellt werden aus Polydimethylsiloxan nach dessen partiellen Aushärtung in solcher Weise, dass ein Ende der Faser mit einem geeigneten Durchmesser in einen Behälter mit partiell ausgehärtetem Polydimethylsiloxan gelegt wird und dieses in Polydimethylsiloxan eingelegte Ende einer Faser anschließend aus dem Behälter mit Polydimethylsiloxan gezogen wird, sodass zwischen der Faser und dem Polydimethylsiloxan in dem Behälter die Lichtwellenfaser aus Polydimethylsiloxan mit geforderten Parametern gebildet wird.

## Revendications

1. Procédé de préparation de guides d'onde à fibres optiques à partir de polydiméthylsiloxane, **caractérisé par le fait que** les guides d'onde à fibres optiques sont créés à partir de polydiméthylsiloxane après son durcissement partiel, de manière que les extrémités des deux fibres entre lesquelles se trouve un espace approprié, soient reliées entre elles par du polydiméthylsiloxane partiellement durci, et que ces deux extrémités de fibre soient ensuite écartées jusqu'à produire une fibre de polydiméthylsiloxane avec les paramètres requis, entre elles.

2. Procédé de préparation de guides d'onde à fibres optiques à partir de polydiméthylsiloxane, **caractérisé par le fait que** les guides d'onde à fibres optiques sont créés à partir de polydiméthylsiloxane après son durcissement partiel, de manière qu'une extrémité de la fibre de diamètre approprié est placée dans un récipient contenant du polydiméthylsiloxane partiellement durci, puis cette extrémité insérée d'une fibre dans le polydiméthylsiloxane est sortie du récipient contenant du polydiméthylsiloxane, de manière à former entre la fibre et le polydiméthylsiloxane dans le récipient, la fibre optique de polydiméthylsiloxane avec les paramètres requis.
